# EUROPÄISCHE PATENTSCHRIFT

(11) **EP 1 107 824 B1**
(45) Veröffentlichungstag und Bekanntmachung des Hinweises auf die Patenterteilung: **05.12.2001**
(21) Anmeldenummer: 99936166.0
(22) Anmeldetag: 20.07.1999
(51) Int. Cl.: B01J 23/92, B01J 38/48, B01J 38/60, B01J 38/64, B01D 53/96, B01D 53/86

(54) **VERFAHREN ZUR REGENERIERUNG VON GEBRAUCHTEN DeNOx- BZW. DeDIOXIN-KATALYSATOREN**
METHOD FOR REGENERATING USED DeNOx OR DeDIOXIN CATALYTIC CONVERTERS
PROCEDE DE REGENERATION DE CATALYSEURS D'ELIMINATION D'AZOTE OU DE DIOXINES

(30) Priorität: 26.08.1998 AT 145398
(43) Veröffentlichungstag der Anmeldung: 20.06.2001
(73) Patentinhaber: INTEGRAL UMWELT- UND ANLAGENTECHNIK GESSELLSCHAFT m.b.H., A-1040 Wien (AT)
(72) Erfinder: BUDIN, Richard, A-2511 Pfaffstätten (AT); KROTLA, Krzysztof, A-1070 Wien (AT); RABITSCH, Hermann, A-1220 Wien (AT)
(74) Vertreter: Atzwanger, Richard, Dipl.-Ing. Patentanwalt
(86) Internationale Anmeldenummer: AT9900182
(87) Internationale Veröffentlichungsnummer: WO0012211

(56) Entgegenhaltungen:
- JP-A- 3 000 135
- JP-A- 4 225 842
- JP-A- 58 000 247
- JP-A- 60 034 743
- US-A- 4 615 991
- PATENT ABSTRACTS OF JAPAN PATENT ABSTRACTS OF JAPAN vol. 009, no. 160 (C-289), vol. 009, no. 160 (C-289), 4. Juli 1985 (1985-07-04) 4. Juli 1985 (1985-07-04) & JP 60 034743 A (BABCOCK HITACHI KK), & JP 60 034743 A (BABCOCK HITACHI KK), 22. Februar 1985 (1985-02-22) 22. Februar 1985 (1985-02-22)
- PATENT ABSTRACTS OF JAPAN PATENT ABSTRACTS OF JAPAN vol. 016, no. 575 (C-1011), vol. 016, no. 575 (C-1011), 15. Dezember 1992 (1992-12-15) 15. Dezember 1992 (1992-12-15) & JP 04 225842 A (BABCOCK HITACHI KK), & JP 04 225842 A (BABCOCK HITACHI KK), 14. August 1992 (1992-08-14) 14. August 1992 (1992-08-14)
- PATENT ABSTRACTS OF JAPAN PATENT ABSTRACTS OF JAPAN vol. 007, no. 066 (C-157), vol. 007, no. 066 (C-157), 18. März 1983 (1983-03-18) 18. März 1983 (1983-03-18) & JP 58 000247 A (NIHON GAISHI KK), & JP 58 000247 A (NIHON GAISHI KK), 5. Januar 1983 (1983-01-05) 5. Januar 1983 (1983-01-05)
- PATENT ABSTRACTS OF JAPAN PATENT ABSTRACTS OF JAPAN vol. 015, no. 104 (C-0814), vol. 015, no. 104 (C-0814), 13. März 1991 (1991-03-13) 13. März 1991 (1991-03-13) & JP 03 000135 A (MITSUBISHI HEAVY IND & JP 03 000135 A (MITSUBISHI HEAVY IND LTD), 7. Januar 1991 (1991-01-07) LTD), 7. Januar 1991 (1991-01-07)

## Beschreibung

Die gegenständliche Erfindung betrifft ein Verfahren zur Regenerierung von gebrauchten DeNOx- bzw. DeDioxin-Katalysatoren. Derartige Katalysatoren werden in sogenannten DeNOx- bzw. DeDioxin-Anlagen zur Reduzierung und Zerstörung von Stickoxiden und bzw. oder von insbesondere halogenierten Dioxinen und Furanen in Rauchgasen oder sonstigen Abgasen eingesetzt.

Das sog. selektive katalytische Reduktionsverfahren, kurz SCR (Selective Catalytic Reduction), stellt eine der Möglichkeiten dar, die z.B. bei der Verbrennung von fossilen Brennstoffen in Feuerungsanlagen entstehenden Stickoxide NOx, das heißt ein Gemisch aus NO und NO₂, zu vermindern bzw. auch weitgehend zu vermindern. Beim SCR-Prozeß werden unter Einsatz von Ammoniak oder von unter den Systembedingungen Ammoniak bildenden Substanzen als Reduktionsmittel und eines Katalysators die Stickoxide zu Stickstoff und Wasser umgesetzt. Da die katalytischen Reaktionen an der Oberfläche des Katalysators ablaufen, muß durch Verwendung entsprechend poröser Materialien für die Reaktion eine große spezifische Oberfläche zur Verfügung gestellt werden. Durch Verwendung homogener keramischer Katalysatoren, z.B. in Wabenform, wird dieser Anforderung entsprochen. Ein derartiger Katalysator besteht in der Hauptmasse z.B. aus dem Grundstoff Titandioxid (TiO₂), in welchem die aktiven Metallverbindungen, insbes. V₂O₅, WO₃, homogen verteilt sind. Der Katalysator kann aber auch als Beschichtung auf einem Träger, z.B. einem Metallblech, aufgebracht sein.

Gleiche bzw. modifizierte Katalysatoren können unter oxidativen Bedingungen auch zur Verringerung der Emission von organischen Produkten unvollständiger Verbrennung in Abgasen von Verbrennungsanlagen, wie eben z.B. halogenierten Dioxinen und Furanen. eingesetzt werden. Es wird diesbezüglich auf die Offenbarung der WO 91/04780 verwiesen.

Den chemischen Umsetzungen, welche auf der Katalysatoroberfläche ablaufen, sind Transportprozesse vorgelagert und nachgeschaltet. Nach Adsorption der Reaktionsteilnehmer an der inneren Oberfläche des Katalysators kommt es durch chemische Kombination der Reaktionsteilnehmer mit dem Katalysator zu einer Herabsetzung der zur Einleitung der Reaktion unbedingt erforderlichen Aktivierungsenergie. Konsequenz ist die Beschleunigung der Reaktion bzw. der Einstellung des Gleichgewichtes.

Wenn diese aktiven Zentren, z.B. durch Anlagerung von in der Flugasche enthaltenen Alkali- und Erdalkalimetallen bzw. deren Verbindungen, blockiert sind, wodurch die notwendige aktivierte NH₃-Adsorption teilweise verhindert wird, kommt es zur Abnahme der Aktivität. Zu dieser Verschlechterung der aktiven Bereiche der Katalysatoroberfläche durch adsorbierte Katalysatorgifte kommt die Verstopfung der Poren z.B. durch gebildetes Kalziumsulfat (CaSO₁) und Ammoniumhydrogensulfat (NH₄HSO₄). Da der Katalysator nicht 100%ig selektiv auf eine bestimmte Reaktion eingestellt werden kann, fördert der Katalysator auch einige Nebenreaktionen, von denen die Konvertierung von SO₂ zu SO₃ in einer relevanten Größenordnung erfolgt. Wenngleich diese Reaktion durch die Katalysatorzusammensetzung minimiert werden kann, so verbleibt die Tatsache, daß der kleine Anteil von SO₃ genügt, um mit dem unreagierten NH₄, welches als NH₃-Schlupf bezeichnet wird, und H₂O zu verschiedenen Salzen, primär zu Ammoniumhydrogensulfat und Ammoniumsulfat (NH₄)₂SO₄, zu reagieren bzw. sich mit der Flugasche zu verbinden.

Diese Verbindungen bilden sich bei solchen Temperaturen, bei welchen eine Kondensation beim Unterschreiten des Taupunktes von Ammoniumhydrogensulfat erfolgt. Sie können sich am Katalysator ablagern und zusätzlich mit anklebenden Teilchen, z.B. Asche, feiner Staub, SiO₂, Al₂O₃, eine Verstopfung der Poren und dadurch eine Verminderung der Aktivität der Katalysatoren bewirken.

Somit ist die Art der Zusammensetzung der Verbindungen, die sich am Katalysator ablagern können, von der Zusammensetzung der Flugasche, des Rauchgases und von der Betriebstemperatur abhängig. Es handelt sich dabei im allgemeinen um Alkali- ulld Erdalkalimetallverbindungen, welche in der Flugasche als Oxide und durch deren Reaktion mit SO₃ als Sulfate enthalten sind und die sich entweder an der Oberfläche mit anderen in der Flugasche enthaltenen Verbindungen, wie z.B. SiO₂ und Al₂O₃ anlagern und die Poren verstopfen oder durch ihre Elektronendonatoreigenschaften die aktiven Zentren blockieren und dadurch die erforderliche aktivierte NH₁-Adsorption verhindern.

Aus JP-A-60 034 743 ist ein Regenerationsverfahren für Entslickungskatalysatoren bekannt, welches ein Waschen der gebranchten Katalysatoren mit einer Lösung von aktive Zentren schaffenden Metallverbindungen vorsieht.

Aus WO 00/03804 (EP-A-1 098 704), Veröffentlichungsdatum 27.01.2000, Anmeldedatum 05.07.1999, Prioritätsdatum 16.07.1998 und WO 00/01483 (EP-A-1 098 703), Veröffentlichungsdatum 13.01.2000, Anmeldedatum 17.06.1999, Prioritätsdatum 06.07.1998 sind weitere gattungsgemäße Regenerationsverfahren bekannt. Das erste Verfahren beinhaltet Waschen von gebranchten DeNOx-Katalysatoren mit einer Lösung eines polyfunktionellen Komplexbildners (Hydroxy(di)carbonsäuren oder organische Amine wie Ethanolamin), der bevorzugt aktive Zentren schaffende Metallverbindungen zugesetzt werden. Das zweite Verfahren beinhaltet Waschen von gebranchten DeNOx-Katalysatoren mit bevorzugt ein Tensid enthaltender Reinigungslösung unter Ultraschallbehandlung.

Der gegenständlichen Erfindung liegt die Aufgabe zugrunde, ein Verfahren zu schaffen, durch welches die Zahl der für die Katalyse verfügbaren aktiven Zentren so weit wie möglich oder wie angestrebt, nämlich z.B. bis zur Aktivität des frischen Katalysators oder sogar darüber hinaus, erhöht wird, um dadurch den Katalysator völlig oder teilweise zu regenerieren. Diese Aufgabe wird erfindungsgemäß dadurch gelöst, daß ein Waschen der Katalysatoren mit einer Lösung von oberflächenaktiven Substanzen in einer Flüssigkeit, vorzugsweise Wasser, unter gleichzeitigem Zusatz von aktive Zentren schaffenden Metallverbindungen erfolgt.

Durch diese Maßnahme werden abgelagerte Verunreinigungen und chemisorbierte Verbindungen und lonen entfernt, werden alte aktive Zentren wieder verfügbar gemacht und werden zusätzliche aktive Zentren geschaffen. Zudem kann hierdurch überraschenderweise auch eine Aktivitätserhöhung im Vergleich zum frischen Katalysator erfolgen. Die so behandelten Katalysatoren können mit ihrer zurückgewonnenen Aktivität erneut in eine DeNOx-, DeDioxin- bzw. kombinierte Anlage eingebaut werden.

Das Waschen in z.B. wäßrigen Flotten ist ein komplexer Vorgang, bei dem zahlreiche physikalische und chemische Einflüsse zusammenwirken. Es wird darunter sowohl das Entfernen von wasserlöslichen Ablagerungen durch Wasser oder durch wäßrige Lösungen waschaktiver Substanzen, als auch das Ablösen wasserunlöslicher Ablagerungen verstanden. Dabei kann eine Redeposition der bereits abgelösten unlöslichen Anteile, z.B. durch eine Beschallung oder durch eine Stabilisierung der dispergierten Anteile, verhindert werden. Das Wasser dient als Lösemittel für Waschmittel und für lösliche Verbindungen sowie als Transportmedium für die dispergierten Anteile. Der Waschvorgang wird mit dem Benetzen und Durchdringen des Substrates eingeleitet. Dies ist dann rasch und vollständig möglich, wenn die hohe Oberflächenspannung des Wassers durch Tenside als wichtige Waschmittelkomponenten stark herabgesetzt wird. Die physikalische Trennung der Ablagerungen von der Unterlage beruht auf der unspezifischen Adsorption von Tensiden an verschiedenen, im Prozeß vorliegenden Grenzflächen. Schwerlösliche Stoffe werden molekulardispers durch Tensidmizellen solubilisiert. Die Adsorption von Waschmittelinhaltsstoffen induziert Veränderungen der grenzflächenchemischen Eigenschaften und ist demnach die Voraussetzung für eine gute Ablösung.

Während Aniontenside und nicht-ionische Tenside unspezifisch an allen hydrophoben Oberflächen adsorbiert werden, können Komplexbildner spezifisch an Oberflächen mit ausgeprägten Ladungsschwerpunkten chemisorbiert werden. Es ergänzen sich somit Komplexbildner und Tenside in ihrer spezifischen Wirkung an den Grenzflächen. Die Funktion dieser sogenannten Builder, zu denen neben den Komplexbildnern, wie Natriumtriphosphat und anderen Phosphaten, auch lonentauscher, wie z.B. Zeolithe, zählen, besteht vorwiegend darin, die aus den Anlagerungen stammenden Alkali- und Erdalkaliionen, aber auch jene aus der natürlichen Wasserhärte, zu eliminieren und die Tensid-Wirkung zu unterstützen. Eine Reihe von Komplexbildnern, z.B. Aminopolycarbonsäuren, wie EDTA oder NTA, bilden mit Erdalkalien stabile, wasserlösliche Komplexe (Chelatkomplexe), zum Teil auch mit Alkalien. Es kommt zunächst zur Adsorption der Komplexbildner an der Oberfläche und anschließend zur Desorption der wasserlöslichen Komplexe. Das Herauslösen von Kationen über Adsorptions-Desorptionsprozesse bzw. die Verschiebung der Lösungs-gleichgewichte sind die wichtigsten Wirkprinzipien der Komplexbildner und lonentauscher. Da bei Verwendung fester Ionentauscher der lonenaustausch in heterogener Phase stattfindet und daher Adsorptions- und Desorptions-vorgänge fehlen, kann es vorteilhaft sein, Ionentauscher in Kombination mit wasserlöslichen Komplexbildnern zu verwenden, welche in der Lage sind, lonen von festen Oberflächen aufzunehmen und nach dem Transport durch das wäßrige Medium an den lonentauscher abzugeben. Die wasserlöslichen Komplexbildner dienen als Carrier. Zur Anwendung können auch schwächere Komplexbildner, wie z.B. Citrat, Tartrat, Oxalat, Gluconat oder Lactat, kommen.

Die Wirkung der oberflächenaktiven Substanzen kann durch weitere Zusätze, wie z.B. komplexbildende Substanzen oder lonentauscher, sowie auch durch Waschen bei höheren als Umgebungstemperaturen, verstärkt werden. Das Aufbringen von aktiven Metallverbindungen kann durch ein Spülen mit oder Aufbringen von Flüssigkeiten mit einem Gehalt an solchen verstärkt werden. Gegebenenfalls erfolgt ein mehrfaches Spülen mit bzw. Aufbringen von Flüssigkeiten mit dazwischen liegenden Trockenschritten.

Vorzugsweise erfolgt das Waschen der Katalysatoren in mit Wasser, insbesondere mit solchem geringer Härte, d.h. < 10° dH, hergestellten Flotten, in denen waschaktive Substanzen, z.B. anionische oder nicht-ionische Tenside, vor allem schaumarme Tenside. bzw. Gemische der beiden Verbindungen sowie Metallverbindungen, wie z.B. Vanadium-, Wolfram- oder Molybdänverbindungen, enthalten sind, wobei bei allen genannten Waschverfahren eine Zugabe von komplexbildenden Substanzen erfolgen kann. Das Waschen kann auch unter Zugabe von lonentauschern erfolgen. Zusätze von z.B. verdünnten Säuren, wie anorganischen und organischen oder deren Gemische oder von Laugen, gegebenenfalls mit oxidierenden oder reduzierenden Zusätzen, oder von organischen Lösungsmitteln können in Abhängigkeit von der spezifischen Art der Desaktivierung des Katalysators zweckmäßig sein. Die Metallverbindungen sollten nach dem Aufbringen auf die Katalysatoroberfläche unter der Einwirkung von Hitze bei einem Trockenvorgang bzw. nach dem Einbau in die DeNOx- bzw. DeDioxin-Anlage in ihre oxidische Form umgewandelt werden können, ohne daß die Katalysatoraktivität negativ beeinflussende Rückstände verursacht werden. Aus diesem Grund sind alkali-, erdalkali-, halogen- und schwefelfreie Metallverbindungen zu bevorzugen.

Da die meisten Alkaliverbindungen wasserlöslich sind, können sie durch Waschen mit Wasser entfernt werden. Da auch die meisten an der Katalysatoroberfläche haftenden, porenverstopfenden Verbindungen wasserlöslich sind, könnten die wasserunlöslichen Verbindungen, wie SiO₂ oder Al₂O₃, durch das Weglösen der sie zuerst umgebenden wasserlöslichen Verbindungen noch weiter in die Poren eindringen. Um dies zu verhindern, kann die Wäsche der Katalysatoren unter Beschallung erfolgen, wobei der Frequenzbereich vom Infraschallbereich bis in den Ultraschallbereich reichen kann (< 20 Hz bis > 20 kHz). Die Beschallung kann mit konstanter oder mit pulsierender Amplitude erfolgen, z.B. in einem Ultraschallbad, wodurch diese unlöslichen Verbindungen aus den Poren des Katalysators herausgeschleudert werden.

Die beschriebenen physikalisch-chemischen Wirkprinzipien können im Falle des Waschens in einem Flüssigkeitsbad z.B. durch die Hydrodynamik und zusätzlich durch eine mittels einer Flüssigkeitsumlaufeinrichtung erzeugten Strömung oder durch pulsierende Gasblasen unterstützt werden. Außerdem können z.B. suspendierte Teilchen durch die Anlagerung feinster Gasblasen (Flotation) zum Aufschwimmen gebracht werden.

Vor dem Waschen kann weiters eine mechanische Abtragung der äußersten Schicht zur Entfernung der an der Katalysatoroberfläche grob haftenden Verbindungen, wie z. B. Staub, K₂SO₁ oder Na₂SO₄, durch Absaugen, Ausblasen, Sandstrahlen, Bürsten od. dgl. erfolgen.

Nach dem Waschen erfolgt vorzugsweise ein Trocknen der Katalysatoren. Einerseits kann beim Einbau von noch feuchten, regenerierten Katalysatoren in eine DeNOx- bzw. DeDioxin-Anlage Staub oder Flugasche aus dem Rauchgas leicht kleben bleiben und so sofort wieder zu einer teilweisen Desaktivierung führen. Andererseits ist die in den feinen Hohlräumen des Katalysators auf Grund von Kapillarkräften enthaltene Restmenge an Flüssigkeit relativ schwer zu entfernen. Nach dem Einbau des regenerierten Katalysators in eine DeNOx- bzw. DeDioxin-Antage könnte beim erstmaligen Durchströmen durch heißes Rauchgas eine plötzliche Verdampfung mit dem Ergebnis einer Schädigung des Katalysators durch Risse und dadurch negativen mechanischen Eigenschaften, welche eine reduzierte Standzeit des Katalysators verursachen, auftreten. Aus diesem Grund muß eine schonende Trocknung, durch z.B. Durchleiten von heißer Luft mit Temperaturen von beispielsweise 60 bis 120°C, erfolgen. Zusätzlich tritt eine weitere Fixierung der aufgebrachten Metallverbindungen ein.

## Patentansprüche

1. Verfahren zur Regenerierung von gebrauchten DeNOx- bzw. DeDioxin-Katalysatoren, **dadurch gekennzeichnet, daß** ein Waschen der Katalysatoren mit einer Lösung von oberflächenaktiven Substanzen in einer Flüssigkeit unter gleichzeitigem Zusatz von aktive Zentren schaffenden Metallverbindungen erfolgt.

2. Verfahren nach Anspruch 1, **dadurch gekennzeichnet, daß** die oberflächenaktiven Substanzen anionische oder nicht-ionische, vorzugsweise schaumarme Tenside oder Gemische der beiden Verbindungen sind.

3. Verfahren nach einem der Ansprüche 1 und 2, **dadurch gekennzeichnet, daß** die Metallverbindungen Vanadium-, Wolfram- oder Molybdänverbindungen oder Gemische davon sind.

4. Verfahren nach einem der Ansprüche 1 bis 3, **dadurch gekennzeichnet, daß** die Metallverbindungen alkali-, erdalkali-, halogen- und schwefelfrei sind.

5. Verfahren nach einem der Ansprüche 1 bis 4, **dadurch gekennzeichnet, daß** die Flüssigkeit Wasser ist.

6. Verfahren nach Anspruch 5, **dadurch gekennzeichnet, daß** die Wasserhärte geringer als 10° dH ist.

7. Verfahren nach einem der Ansprüche 1 bis 6, **dadurch gekennzeichnet, daß** das Waschen unter Zusatz von Säuren oder Laugen erfolgt,

8. Verfahren nach einem der Ansprüche 1 bis 7, **dadurch gekennzeichnet, daß** das Waschen unter Zusatz von komplexbildenden Substanzen bzw. lonentauschern erfolgt.

9. Verfahren nach einem der Ansprüche 1 bis 8, **dadurch gekennzeichnet, daß** das Waschen mit oxidierenden oder reduzierenden Zusätzen erfolgt.

10. Verfahren nach einem der Ansprüche 1 bis 9, **dadurch gekennzeichnet, daß** das Waschen unter Zusatz von organischen Lösungsmitteln erfolgt.

11. Verfahren nach einem der Ansprüche 1 bis 10, **dadurch gekennzeichnet, daß** das Waschen unter zusätzlicher Einwirkung von Beschallung erfolgt.

12. Verfahren nach Anspruch 11, **dadurch gekennzeichnet, daß** die Frequenz der Beschallung im Ultraschallbereich liegt.

13. Verfahren nach einem der Ansprüche I bis 12, **dadurch gekennzeichnet, daß** im Falle des Waschens in einem Flüssigkeitsbad eine Bewegung der Waschflotte, vorzugsweise durch eine Flüssigkeitsumlaufeinrichtung oder durch Erzeugung von Gasblasen, erfolgt.

14. Verfahren nach einem der Ansprüche 1 bis 13, **dadurch gekennzeichnet, daß** nach dem Waschen ein Spülen mit oder ein Aufbringen von Flüssigkeiten mit einem Gehalt an aktive Zentren schaffenden Metallverbindungen erfolgt.

15. Verfahren nach Anspruch 14, **dadurch gekennzeichnet, daß** das Spülen mit oder Aufbringen von Flüssigkeiten mit einem Gehalt an aktive Zentren schaffenden Metallverbindungen mehrfach, mit dazwischen liegenden Trockenschritten, durchgeführt wird.

16. Verfahren nach Anspruch 14 und 15, **dadurch gekennzeichnet, daß** die Metallverbindungen Vanadium-, Wolfram- oder Molybdänverbindungen oder Gemische davon sind.

17. Verfahren nach einem der Ansprüche 14 bis 16, **dadurch gekennzeichnet, daß** die Metallverbindungen alkali-, erdalkali-, halogen- und schwefelfrei sind.

18. Verfahren nach einem der Ansprüche l bis 17, **dadurch gekennzeichnet, daß** das Waschen bei einer Temperatur von mehr als 30° C durchgeführt wird.

19. Verfahren nach einem der Ansprüche l bis 18, **dadurch gekennzeichnet, daß** ein Trocknen der Katalysatoren, z.B. durch Durchblasen erhitzter Luft, erfolgt.

## Claims

1. A process for regenerating used DeNOx or DeDioxin catalysts, **characterised in that** the catalysts are washed with a solution of surface-active agents in a liquid with simultaneous addition of metal compounds which create active centres.

2. A process according to claim 1, **characterised in that** the surface-active agents are anionic or non-ionic, preferably low-foam surfactants or mixtures of the two compounds.

3. A process according to one of claims 1 and 2, **characterised in that** the metal compounds are vanadium, tungsten or molybdenum compounds or mixtures thereof.

4. A process according to one of claims 1 to 3, **characterised in that** the metal compounds are free of alkali metals, alkaline earth metals, halogen and sulfur.

5. A process according to one of claims 1 to 4, **characterised in that** the liquid is water.

6. A process according to claim 5, **characterised in that** the water hardness is lower than 10° dH (German hardness degrees).

7. A process according to one of claims 1 to 6, **characterised in that** washing is performed with the addition of acids or alkaline solutions.

8. A process according to one of claims 1 to 7, **characterised in that** washing is performed with the addition of complex-forming substances or ion exchangers.

9. A process according to one of claims 1 to 8, **characterised in that** washing is performed with oxidising or reducing additives.

10. A process according to one of claims 1 to 9, **characterised in that** washing is performed with the addition of organic solvents.

11. A process according to one of claims 1 to 10, **characterised in that** washing is performed with additional exposure to sonication.

12. A process according to claim 11, **characterised in that** the sonication frequency is in the ultrasonic range.

13. A process according to one of claims 1 to 12, **characterised in that**, in the case of washing in a liquid bath, the washing liquor is made to move, preferably by a liquid circulating device or by the generation of gas bubbles.

14. A process according to one of claims 1 to 13, **characterised in that** washing is followed by rinsing with or application of liquids with a content of metal compounds which create active centres.

15. A process according to claim 14, **characterised in that** the rinsing with or application of liquids with a content of metal compounds which create active centres is performed repeatedly, with intervening drying stages.

16. A process according to claim 14 and claim 15, **characterised in that** the metal compounds are vanadium, tungsten or molybdenum compounds or mixtures thereof.

17. A process according to one of claims 14 to 16, **characterised in that** the metal compounds are free of alkali metals, alkaline earth metals, halogen and sulfur.

18. A process according to one of claims 1 to 17, **characterised in that** washing is performed at a temperature greater than 30°C.

19. A process according to one of claims 1 to 18, **characterised in that** the catalysts are dried, for example by blowing heated air therethrough.

## Revendications

1. Procédé pour la régénération de catalyseurs usés d'élimination d'azote ou de dioxines, **caractérisé en ce qu'**on effectue un lavage des catalyseurs avec une solution de substances tensioactives dans un liquide, avec apport simultané de composés métalliques réalisant des centres actifs.

2. Procédé selon la revendication 1, **caractérisé en ce que** les substances tensioactives sont des agents tensioactifs anioniques ou non ioniques, de préférence peu moussants ou des mélanges de ces deux composés.

3. Procédé selon l'une des revendications 1 et 2, **caractérisé en ce que** les composés métalliques sont des composés de vanadium, de tungstène ou de molybdène ou des mélanges de ceux-ci.

4. Procédé selon l'une des revendications 1 à 3, **caractérisé en ce que** les composés métalliques ne contiennent ni alcalins, ni alcalino-terreux, ni halogène, ni soufre.

5. Procédé selon l'une des revendications 1 à 4, **caractérisé en ce que** le liquide est de l'eau.

6. Procédé selon la revendication 5, **caractérisé en ce que** la dureté de l'eau est inférieure à 10° dH.

7. Procédé selon l'une des revendications 1 à 6, **caractérisé en ce que** le lavage s'effectue par addition d'acides ou de lessives.

8. Procédé selon l'une des revendications 1 à 7, **caractérisé en ce que** le lavage s'effectue par addition de substances complexantes respectivement d'échangeurs d'ions.

9. Procédé selon l'une des revendications 1 à 8, **caractérisé en ce que** le lavage s'effectue avec des additifs oxydants ou réducteurs.

10. Procédé selon l'une des revendications 1 à 9, **caractérisé en ce que** le lavage s'effectue par addition de solvants organiques.

11. Procédé selon l'une des revendications 1 à 10, **caractérisé en ce que** le lavage s'effectue par action supplémentaire d'ondes sonores.

12. Procédé selon la revendication 11, **caractérisé en ce que** la fréquence des ondes sonores se situe dans le domaine des ultrasons.

13. Procédé selon l'une des revendications 1 à 12, **caractérisé en ce que** dans le cas du lavage dans un bain de liquide, le bain de lavage est mis en mouvement, de préférence par un dispositif de mise en circulation du liquide ou par production de bulles de gaz.

14. Procédé selon l'une des revendications 1 à 13, **caractérisé en ce qu'**après le lavage on effectue un rinçage avec des liquides ou une application de liquides qui contiennent des composés métalliques réalisant des centres actifs.

15. Procédé selon la revendication 14, **caractérisé en ce que** le rinçage avec des liquides ou l'application de liquides contenant des composés métalliques réalisant des centres actifs est exécuté plusieurs fois, avec des étapes de séchage intercalaires.

16. Procédé selon les revendications 14 et 15, **caractérisé en ce que** les composés métalliques sont des composés de vanadium, de tungstène ou de molybdène ou des mélanges de ceux-ci.

17. Procédé selon l'une des revendications 14 à 16, **caractérisé en ce que** les composés métalliques ne contiennent ni alcalins, ni alcalino-terreux, ni halogène, ni soufre.

18. Procédé selon l'une des revendications 1 à 17, **caractérisé en ce que** le lavage est exécuté à une température supérieure à 30 °C.

19. Procédé selon l'une des revendications 1 à 18, **caractérisé en ce qu'**on effectue un séchage des catalyseurs, par exemple par soufflage d'air chaud.
